# EUROPÄISCHE PATENTSCHRIFT

(11) **EP 2 661 610 B1**
(45) Veröffentlichungstag und Bekanntmachung des Hinweises auf die Patenterteilung: **12.09.2018**
(21) Anmeldenummer: 11793681.5
(22) Anmeldetag: 10.12.2011
(51) Int. Cl.: G01G 21/28, G01G 23/02

(54) **WAAGE MIT ENTKOPPELUNGSMECHANISMUS UND WINDSCHUTZ**
SCALE WITH DECOUPLING MECHANISM AND WINDSHIELD
BALANCE AVEC MÉCANISME DE DÉCOUPLAGE ET PARE-VENT

(30) Priorität: 03.01.2011 DE 102011000011
(43) Veröffentlichungstag der Anmeldung: 13.11.2013
(73) Patentinhaber: Sartorius Lab Instruments GmbH & Co. KG, 37079 Göttingen (DE)
(72) Erfinder: IAIA, Aldo, 37075 Göttingen (DE)
(74) Vertreter: Prinz & Partner mbB
(86) Internationale Anmeldenummer: PCT/EP2011/006237
(87) Internationale Veröffentlichungsnummer: WO 2012/092945

(56) Entgegenhaltungen:
- DE-C1- 3 601 408
- DE-C1- 4 236 391
- US-A1- 2008 087 474

## Beschreibung

Die Erfindung betrifft eine Waage, mit einem Wägesystem, einem durch einen Windschutz begrenzten Wägeraum, in den ein das Gewicht der Last aufnehmendes, die Belastung in das Wägesystem einleitendes Lastübertragungsteil, das üblicherweise die Waagschale ist, ragt, und einem Antrieb zum Öffnen und Schließen des Windschutzes.

Eine gattungsgemäße Waage ist aus der DE 42 36 391 C1 bekannt. Diese Waage hat einen zylindrischen, drehbaren Windschutz. Dieser Windschutz hat auf der Umfangswand ein Fenster, über das der Zugang zum Wägeraum ermöglicht wird. Zum Schließen des Windschutzes wird dieser so gedreht, dass das Fenster mit einer nicht drehbaren, gehäusefesten Schließplatte ausgerichtet ist, und diese Schließplatte wird gegen den Rand des Fensters gedrückt, sodass der Windschutz geschlossen ist.

Die DE 36 01 408 C1 zeigt eine Analysenwaage, die eine in einem Gehäuse untergebrachte Wägekammer aufweist, welche nach oben hin durch seitlich bewegbare Platten geschlossen werden kann, sodass eine Art Schleuse entsteht. Bei dieser Waage ist zudem ein Hubelement für die Waagschale vorhanden, damit beim Beschicken der Waagschale diese vom Wägesystem entkoppelt ist. Insbesondere bei Waagen mit extrem hoher Auflösung, auf die sich die Erfindung bezieht, wirken sich beim Beschicken der Waagschale kaum zu vermeidende Querkräfte negativ auf das Wägeergebnis aus. Es kommt zum Versetzen in der Anzeige, und es dauert einige Zeit, bis ein Stillstand der Waage, das heißt ein stationärer Zustand, erreicht ist. Um dies zu vermeiden, ist der Hubmechanismus vorgesehen.

Aus der US 2008/0087474 A1 ist eine Waage bekannt, die ein Lastübertragungsteil aufweist, in das das zu wiegende Objekt von einem Übergabemechanismus automatisch eingelegt wird. Das Lastübertragungsteil ist stets mit dem Wägesystem gekoppelt.

Aufgabe der Erfindung ist es, eine hochauflösende Waage zu schaffen, die ein schnelles, genaues Wägeergebnis anzeigt.

Dies wird bei einer Waage der eingangs genannten Art durch einen mechanisch mit dem Antrieb verbundenen Entkoppelungsmechanismus erreicht, der das Wägesystem mechanisch in Lastrichtung vom Lastübertragungsteil entkoppelt, wenn der Windschutz geöffnet ist, und das Wägesystem in Lastrichtung mit dem Lastübertragungsteil bei geschlossenem Windschutz koppelt. Der Windschutz hat ein Fenster, welches durch den Antrieb drehangetrieben ist.

Die erfindungsgemäße Waage benutzt den Antrieb für das Öffnen und Schließen des Windschutzes, um davon die Bewegung für das Koppeln und Entkoppeln abzuleiten. Die Entkoppelung und Koppelung erfolgt in Lastrichtung, um keinerlei Querkräfte auftreten zu lassen. Das Lastübertragungsteil kann eines von mehreren im Kraftflussweg zwischen dem Wägesystem und der Waagschale liegendes Teil sein oder die Waagschale selbst.

Die bevorzugte Ausführungsform sieht vor, dass der Entkoppelungsmechanismus ein Hubmechanismus zum Anheben und Absenken des Lastübertragungsteils ist. Beim Anheben ist das Lastübertragungsteil vom Wägesystem entkoppelt und umgekehrt.

Der Hubmechanismus wandelt insbesondere die Drehbewegung des Windschutzes in eine Hub- und Senkbewegung mechanisch um, wodurch eine hohe Zuverlässigkeit und ein geringer baulicher Aufwand realisiert werden können.

Der Hubmechanismus kann wenigstens eine Rampenfläche, vorzugsweise aber mehrere um die zentrale Achse des Lastübertragungsteils verteilte Rampenflächen haben. Diese Rampenfläche oder Rampenflächen sind an einer von zwei sich gegenüberliegenden, relativ zueinander rotierenden Teilen, vorzugsweise an einem Wägeraumboden zur Erzeugung der Hub- und Senkbewegung vorgesehen. Von der Rampenfläche abgeleitet wird also aus der Drehbewegung eine axiale Hubbewegung. Der Wägeraumboden ist dasjenige abnehmbare platten- oder schalenförmige Teil, welches drehfest im Wägeraum angeordnet ist und unterhalb der Waagschale liegt.

Um den Leichtlauf des Entkoppelungsmechanismus zu erhöhen, sieht die Erfindung gemäß einer Ausführungsform vor, dass ein an der Rampenfläche entlanglaufendes Wälzelement vorgesehen ist, das an der Rampenfläche Reibung vermeidet.

Vorzugsweise ist das Wälzelement an einem sogenannten Koppelungsteil zwischen einem Antriebsteller und dem Windschutz gelagert. Der Antriebsteller wird üblicherweise über einen Riemenantrieb oder ein anderweitiges Getriebe vom Motor in Drehung versetzt. Der Windschutz ist üblicherweise von oben abnehmbar und hat einen offenen Boden, der auf den Antriebsteller aufgesetzt ist und mit ihm über eine Formschlussverbindung drehverbunden wird. Das Koppelungsteil, welches fest mit dem Windschutz verbunden ist, stellt dann die mechanische Verbindung zwischen dem Windschutz und dem Antriebsteller sicher.

Gemäß der bevorzugten Ausführungsform ist das Koppelungsteil ein ringscheibenartiger, am unteren Rand des Windschutzes angebrachter, sich radial einwärts vom Rand des Windschutzes erstreckender Boden.

Die Lagerung des Wälzelements kann an einer radial nach innen ragenden Lagerlasche am Koppelungsteil vorgesehen sein.

Das Lastübertragungsteil kann konzentrisch zu einem vertikal beweglichen, abschnittsweise unter ihm angeordneten Hebeteil angeordnet sein, das angehoben wird und dabei mit dem Lastübertragungsteil in Kontakt kommt, um es mit anzuheben und zu entkoppeln. Durch die konzentrische Anordnung kann sichergestellt werden, dass das Lastübertragungsteil exakt ausgerichtet in Lastübertragungsrichtung angehoben und positionsgenau wieder abgesetzt wird.

Das Hebeteil ist in der bevorzugten Ausführungsform der Wägeraumboden, sodass dieser mehrere Funktionen innehat.

Wie bereits zu Beginn erläutert, sieht die Erfindung in der bevorzugten Ausführungsform vor, dass das Lastübertragungsteil eine stationäre Waagschale ist.

Die Waagschale kann rückseitig einen angeformten Zapfen haben, der durch die übrigen Teile wie Wägeraumboden, Auflagering für Wägeraumboden und Antriebsteller hindurchragt, um sich bis zum Wägesystem im Gehäuse der Waage zu erstrecken. Allgemein gesagt sitzt der rückseitig abstehende Zapfen auf dem Wägesystem auf.

Eine gute Positionierung beim Absenken wird dadurch erreicht, dass das Lastübertragungsteil mit einem Aufnahmekonus versehen ist, der auf einem Stift des Wägesystems sitzt, von dem das Lastübertragungsteil abgehoben wird. Dieser Stift ist vorzugsweise ebenfalls konusförmig ausgeführt, sodass sich die Aufnahme und der Stift zueinander zentrieren.

Der Stift sollte tiefer in den Konus eindringen als der Hubweg zwischen Hub- und Senkstellung, damit der Stift stets, auch beim angehobenen Lastübertragungsteil, im Konus bleibt und damit eine seitliche Sicherung der beiden Teile zueinander erreicht wird. Beim Absenken zentrieren sich, wie gesagt, die Teile zueinander, was für das Wägeergebnis entscheidend ist.

Bezüglich des Windschutzes sollte die erfindungsgemäße Waage ähnlich wie die in der DE 42 36 391 C1 vorgesehene Mechanik ausgeführt sein. Das Fenster im Windschutz, welcher drehangetrieben wird, ist mit einer nicht drehbaren Schließplatte für das Fenster in der Schließstellung ausgerichtet. Die Schließplatte wird dabei gegen den Windschutz bewegt, um ihn zu schließen. Vorzugsweise drückt die Schließplatte leicht gegen den Rand des Fensters.

Um ein exaktes Bewegen in Lastrichtung zu realisieren, sollte das Lastübertragungsteil um seine zentrale Achse herum an mehreren Stellen beim Entkoppeln kontaktiert werden, und zwar von dem Teil, das es bewegt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Seitenansicht der erfindungsgemäßen Waage,
- Figur 2 eine schematische Schnittansicht der Waage in Figur 1 mit geschlossenem Windschutz,
- Figur 3 eine horizontale Teilschnittansicht längs der Linie III-III in Figur 2,
- Figur 4 eine Seitenansicht mehrerer Teile im Bereich des Bodens des Windschutzes bei geschlossenem Windschutz,
- Figur 5 eine schematische Schnittansicht der Waage mit offenem Windschutz,
- Figur 6 eine horizontale Teilschnittansicht längs der Linie VI-VI in Figur 5, und
- Figur 7 eine schematische Seitenansicht mehrerer Teile im Bereich des Windschutzbodens bei geöffnetem Windschutz.

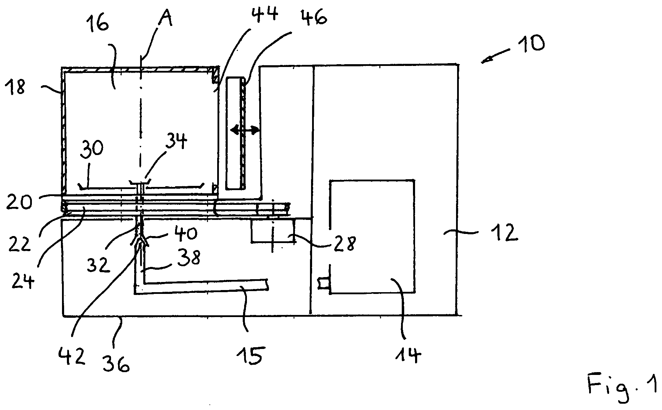

In Figur 1 ist eine hochauflösende elektronische Waage 10 dargestellt. Die Waage 10 hat mehrere funktional zu unterscheidende Abschnitte, nämlich eine Wägezelle 12 mit einem Wägesystem 14, das unter anderem einen Lastkragarm 15 aufweist, der aus der Wägezelle 12 bis unterhalb eines Wägeraums 16 ragt. Der Wägeraum 16 ist durch einen durchsichtigen Windschutz 18 nach außen begrenzt.

Der Windschutz 18 hat eine umgekehrte Topfform mit einer offenen Unterseite. Der untere Rand 20 des Windschutzes 18 sitzt direkt oder indirekt auf einem drehbaren Antriebs- oder Drehteller 22, welcher über einen Riemen 24 zusammen mit dem Windschutz 18 von einem Antrieb 28 in Form eines Elektromotors in Drehung versetzt werden kann.

Im Inneren des Wägeraums 16 im Bereich des Bodens ist ein nicht drehbarer, nach oben abnehmbarer Wägeraumboden 30 vorgesehen, der eine zentrale Öffnung hat, durch welche sich ein Zapfen 32 einer Waagschale 34 hindurch erstreckt. Der schalenartige Abschnitt der Waagschale 34 liegt oberhalb des Wägeraumbodens 30, der Zapfen 32 ragt von der Unterseite des schalenartigen Abschnitts nach unten in ein Gehäuse 36 der Waage und ist zu einem exakt vertikal nach oben stehenden Stift 38 am Lastkragarm 15 ausgerichtet.

Der Zapfen 32 hat an seinem unteren Ende eine konusförmige Aufnahme 40, in die sich von unten der entsprechende Konus 42 am freien Ende des Stifts 38 erstreckt.

Die Waagschale 34 mit ihrem Zapfen 32 bildet ein Lastübertragungsteil, welches in Lastrichtung (vertikale Richtung) die Belastung durch den auf die Waagschale 34 aufgebrachten, zu wiegenden Körper oder Substanz auf das Wägesystem überträgt und die Last in das Wägesystem einleitet. Zum Wiegen liegt die Waagschale 34 mit ihrem Aufnahmekonus 40 auf dem Stift 38 vertikal spielfrei auf.

Der Windschutz 18 hat ein Fenster 44, über welches die zu wiegende Masse in den Wägeraum 16 eingebracht werden kann. Zum Wiegen selbst muss dieses Fenster 44 geschlossen sein. Hierzu ist eine Schließplatte 46 vorgesehen, welche vorzugsweise gekrümmt ist und welche nicht mit dem Windschutz 18 mit rotiert, sondern drehfest am Gehäuse 36 gelagert ist. Die Schließplatte 46 kann jedoch radial in Richtung zur Mittelachse A, welche die Drehachse bildet, bewegt werden, um gegen den Rand des Fensters 44 gepresst zu werden und das Fenster 44 zu schließen. Hierzu ist ein Verfahrmechanismus vorgesehen, der entweder einen separaten Motor aufweist oder der die Bewegung des Windschutzes 18 in eine seitliche Verstellbewegung umsetzt, wie dies in der DE 42 36 391 C1 beschrieben ist. Die in der Figur 1 gezeigte Stellung ist die Stellung, kurz bevor der Windschutz 18 in der geschlossenen Stellung ist und die Schließplatte 46 gegen sein Fenster 44 bewegt wird.

Zum Öffnen des Windschutzes 18 wird dieser um beispielsweise 90° gegenüber der in Figur 1 gezeigten Stellung verfahren, sodass das Fenster 44 seitlich zugänglich ist. Zu Beginn der Drehbewegung wird die Schließplatte 46 in die in Figur 1 gezeigte geöffnete Stellung gebracht, und der Windschutz 18 dreht, angetrieben vom Motor, um die vorgegebene Winkelstellung.

Um in der geöffneten Stellung des Windschutzes 18, wenn die Waage bestückt wird, das Wägesystem von der Last zu entkoppeln, ist ein Entkoppelungsmechanismus vorgesehen, der in den übrigen Figuren näher erläutert wird. Dieser Entkoppelungsmechanismus ist in der bevorzugten Ausführungsform als Hubmechanismus zum Anheben und Absenken des Lastübertragungsteils, hier der Waagschale 34, ausgeführt.

Der Hubmechanismus wandelt eine Drehbewegung des Windschutzes 18 in eine Hub- und Senkbewegung der Waagschale 34 um.

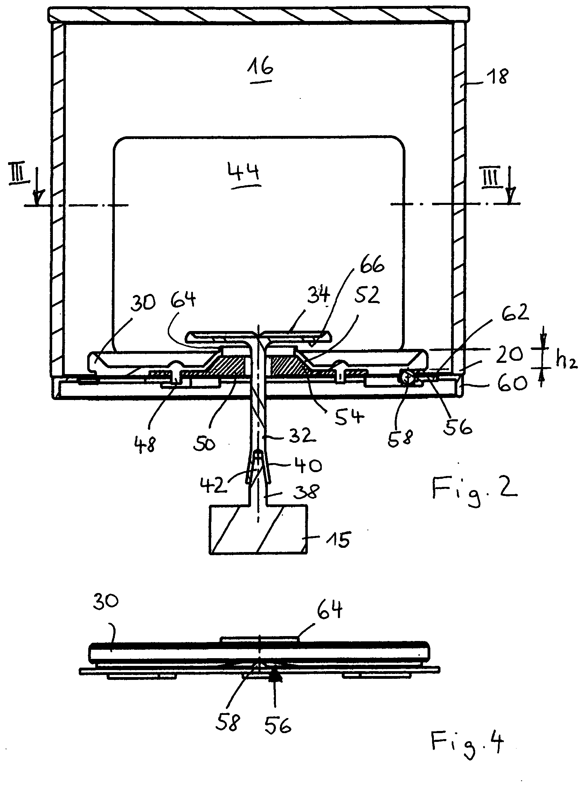

In Figur 2 ist der Windschutz 18 in geschlossenem Zustand zu sehen, in dem das Fenster 44 nach hinten weist (wie in Figur 1). Darüber hinaus sind weitere Details zu erkennen. Unterhalb des schalenartigen Abschnitts der Waagschale 34 ist der Wägeraumboden 30 zu erkennen, der rückseitige Fortsätze 48 hat, welche in Öffnungen in einem sogenannten Auflagering 50 ragen. Der Auflagering 50 ist in Figur 2 nur abschnittsweise zu erkennen, er besitzt einen nicht gezeigten hülsenförmigen, nach unten abstehenden Abschnitt, mit dem er gehäuseseitig gelagert ist. Der Auflagering 50 ist stationär, das heißt er dreht sich nicht. Durch die Fortsätze 48 wird auch der Wägeraumboden 30 an jeglicher Drehbewegung gehindert.

Der Wägeraumboden 30 hat eine zentrische Öffnung, durch die sich der Zapfen 32 erstreckt. Der Rand dieser Öffnung ist als Konus 52 ausgeführt. Dieser Konus 52 ist an den Konus 54 des Auflagerings, den dieser besitzt, angepasst, sodass der Auflagering 50 den Wägeraumboden 30 über die Konen 52, 54 zentriert.

Die Unterseite des Wägeraumbodens 30 ist nicht plan ausgeführt, sondern besitzt mehrere kreissegmentförmige Rampenflächen 56. Diese Rampenflächen 56 wirken mit einem sich relativ dazu bewegenden Teil zusammen, welches an der jeweiligen Rampenfläche 56 entlangläuft. In der dargestellten Ausführungsform sind Wälzelemente 58, hier Kugeln vorgesehen, auf denen die Rampenflächen 56 aufliegen.

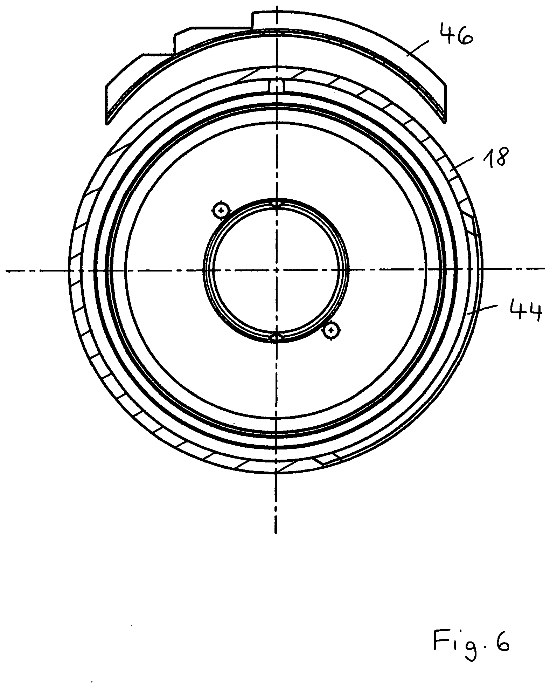

Die Wälzelemente 58 werden auf einem Koppelungsteil 60 gelagert, welches am Rand 20 des Windschutzes 18 angebracht ist und den Windschutz 18 drehantriebsmäßig mit dem Drehteller 22 koppelt, wobei der Drehteller 22 in den Figuren 2 bis 7 der Übersichtlichkeit halber weggelassen ist. Das Koppelungsteil 60 ist eine Ringscheibe, die sich vom Rand 20 nach unten und radial einwärts erstreckt. Das Koppelungsteil 60 hat radial nach innen ragende, fingerartige Lagerlaschen 62, an denen die Wälzelemente 58 gelagert sind.

Das Koppelungsteil 60 bildet eine Art Boden für den Windschutz 18. Ein oder mehrere Fortsätze am Koppelungsteil 60 oder am Drehteller 22 kommen mit entsprechenden Ausnehmungen im anderen der beiden Teile in Eingriff, um die Drehmitnahme sicherzustellen.

In der in Figur 2 gezeigten, geschlossenen Position des Windschutzes 18 sind die Wälzelemente 58 so gelegen, dass sie die niedrigsten Abschnitte der Rampenflächen 56 kontaktieren. In dieser Stellung ist der Wägeraumboden 30 in seiner abgesenkten Stellung, in der er im Bereich des oberen, umlaufenden Randes 64 des Konus 52 von der Unterseite 66 des schalenförmigen Abschnitts der Waagschale 34 beabstandet ist. In diesem Zustand liegt der Aufnahmekonus 40 auch auf dem Konus 42 des Stiftes 38 auf. In diesem Zustand wird auch gewogen.

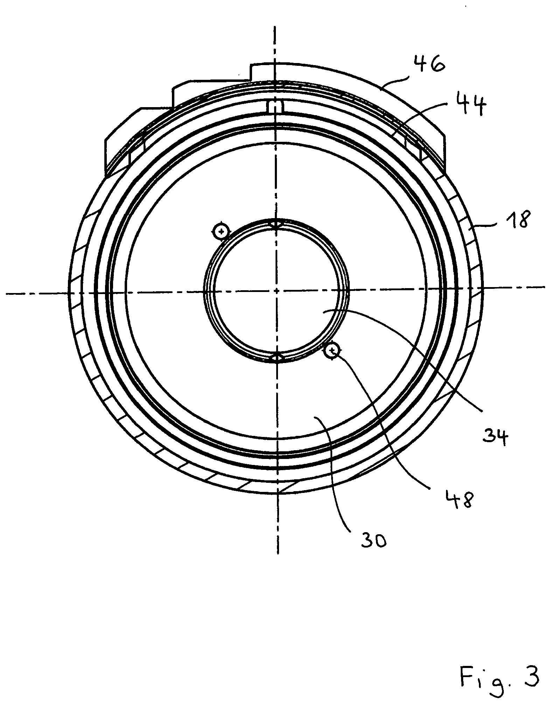

Figur 3 zeigt dabei, dass die Schließplatte 46 am Rand des Fensters 44 anliegt.

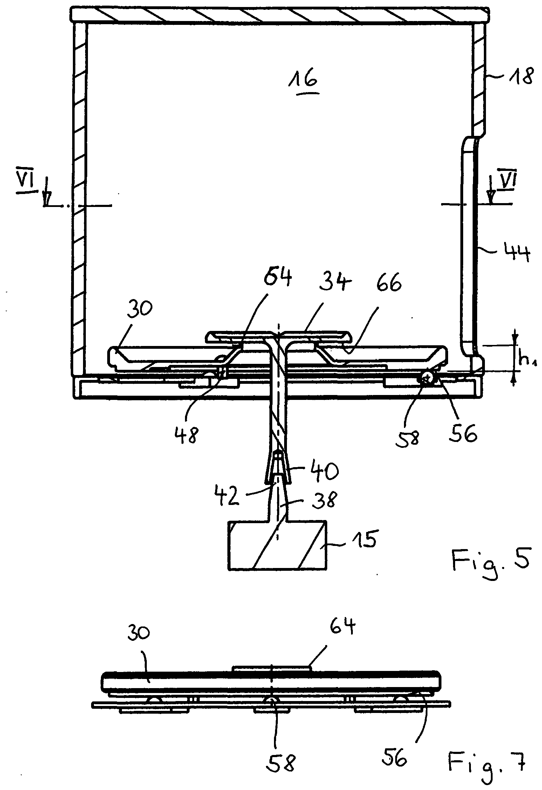

Wird aber der Wägeraum beschickt oder entleert, wird über den Motor der Windschutz 18 in seine geöffnete Stellung bewegt, in der das Fenster 44 zur Seite ausgerichtet ist (siehe Figur 5). Von dieser Drehbewegung des Windschutzes 18 wird eine vertikale Hubbewegung abgeleitet, was über die Rampenflächen 56 erfolgt. Durch Drehen des Drehtellers 22 dreht sich auch das Koppelungsteil 60 um die Achse A. Damit wandern auch die Wälzelemente 58 als Auflagepunkte für den Wägeraumboden 30 um die Achse A und entlang der zugeordneten Rampenflächen 56.

Der Höhenunterschied in vertikaler Richtung, den die Rampenflächen 56 zwischen dem höchsten und niedrigsten Punkt besitzen, lässt sich als Unterscheidung zwischen den Höhen h₁ und h₂ in den Figuren 2 und 5 erkennen. Beim Drehen wandert also die Wälzelemente 58 in Abschnitte der Rampenflächen 56, die höher liegen, sodass der Wägeraumboden 30 dadurch angehoben wird. Der Wägeraumboden 30 dreht sich aber aufgrund der Fortsätze 48 nicht, denn diese bleiben weiter mit dem Auflagering 50 in Eingriff. Der umlaufende Rand 64 kommt bei der Bewegung des Wägeraumbodens 30 vertikal nach oben mit der Unterseite 66 in Kontakt und hebt die Waagschale 34 an, sodass der Aufnahmekonus 40 in vertikaler Richtung vom Stift 38 entkoppelt wird. Seitlich bleibt der Stift 38 jedoch im Aufnahmekonus 40, wie Figur 5 zeigt. Der Wägeraumboden 30 wirkt als Hebeteil.

In dieser angehobenen Position wird die Waage bestückt. Sämtliche Gewichts- und Querkräfte, die beim Bestücken oder Entleeren des Wägeraums 16 auf die Waagschale 34 ausgeübt werden, werden direkt in den Wägeraumboden 30 eingeleitet und bleiben vom Wägesystem 14 entfernt, dank der Entkoppelung in Lastrichtung und auch in Querrichtung, da ein seitlicher Spalt zwischen dem Aufnahmekonus 40 und dem Konus 42 des Stifts 38 besteht.

Zum Wiegen der aufgebrachten Last wird der Windschutz 18 geschlossen und wieder in Rotation versetzt. Dabei wandern die Wälzelemente 58 auf den zugeordneten Rampenflächen 56 sozusagen abwärts, sodass langsam und gleichmäßig sowohl der Wägeraumboden 30 als auch die Waagschale 34 abgesenkt werden. Schließlich ist zwischen dem Rand 64 und der Unterseite 66 wieder ein Spalt, und der Aufnahmekonus 40 liegt wieder am Konus 42 an. Bei dieser Abwärtsbewegung zentrieren sich sämtliche Teile über die zahlreichen Konen wieder miteinander.

Durch das exakte Aufsetzen der Waagschale 34 auf das Wägesystem 14 in Krafteinleitungsrichtung werden Störungen durch Querkräfte vermieden. Das mit hoher Reproduzierbarkeit erzielbare Absetzen der Waagschale 34 führt zu minimalen Störungen des Wägesystems, die sich aber sehr schnell abbauen und vor allem auch herausfiltern lassen.

### Bezugszeichenliste

- 10: Waage
- 12: Wägezelle
- 14: Wägesystem
- 15: Lastkragarm
- 16: Wägeraum
- 18: Windschutz
- 20: Rand
- 22: Drehteller
- 24: Riemen
- 28: Antrieb
- 30: Wägeraumboden
- 32: Zapfen
- 34: Waagschale
- 36: Gehäuse
- 38: Stifts
- 40: Aufnahmekonus
- 42: Konus
- 44: Fenster
- 46: Schließplatte
- 48: Fortsätze
- 50: Auflagering
- 52: Konus
- 54: Konus
- 56: Rampenfläche
- 58: Wälzelement
- 60: Koppelungsteil
- 62: Lagerlasche
- 64: Rand
- 66: Unterseite

## Patentansprüche

1. Waage mit einem Wägesystem (14), einem durch einen Windschutz (18) begrenzten Wägeraum (16), in den ein das Gewicht der Last aufnehmendes, die Belastung in das Wägesystem (14) einleitendes Lastübertragungsteil ragt, und einem Antrieb (28) zum Öffnen und Schließen des Windschutzes (18), **dadurch gekennzeichnet, dass** ein mechanisch mit dem Antrieb (28) verbundener Entkoppelungsmechanismus vorgesehen ist, der das Wägesystem (14) mechanisch in Lastrichtung vom Lastübertragungsteil entkoppelt, wenn der Windschutz (18) geöffnet ist, und das Wägesystem (14) in Lastrichtung mit dem Lastübertragungsteil bei geschlossenem Windschutz (18) koppelt und dass der Windschutz (18) ein Fenster (44) hat und durch den Antrieb (28) drehangetrieben ist.

2. Waage nach Anspruch 1, **dadurch gekennzeichnet, dass** der Entkoppelungsmechanismus ein Hubmechanismus zum Anheben und Absenken des Lastübertragungsteils ist.

3. Waage nach Anspruch 2, **dadurch gekennzeichnet, dass** der Hubmechanismus eine Drehbewegung des Windschutzes (18) in eine Hub- und Senkbewegung mechanisch umwandelt.

4. Waage nach Anspruch 2 oder 3, **dadurch gekennzeichnet, dass** der Hubmechanismus eine Rampenfläche (56) an einer von zwei sich gegenüberliegenden, relativ zueinander rotierenden Teilen, vorzugsweise an einem Wägeraumboden (30), zur Erzeugung der Hub- und Senkbewegung hat.

5. Waage nach Anspruch 4, **dadurch gekennzeichnet, dass** ein an der Rampenfläche (56) entlanglaufendes Wälzelement (58) vorgesehen ist, vorzugsweise wobei das Wälzelement (58) an einem Koppelungsteil (60) zwischen einem Antriebsteller (50) und dem Windschutz (18) gelagert ist.

6. Waage nach Anspruch 5, **dadurch gekennzeichnet, dass** das Koppelungsteil (60) ein ringscheibenartiger, am unteren Rand (20) des Windschutzes (18) angebrachter, sich radial einwärts vom Rand (20) erstreckender Boden ist, der zumindest eine radial nach innen ragende Lagerlasche (62) für das Wälzelement (58) hat.

7. Waage nach einem der vorhergehenden Ansprüche, **dadurch gekennzeichnet, dass** das Lastübertragungsteil konzentrisch zu einem vertikal beweglichen, abschnittsweise unter ihm angeordneten Hebeteil angeordnet ist, das angehoben wird und mit dem Lastübertragungsteil in Kontakt kommt, vorzugsweise wobei das Hebeteil ein Wägeraumboden (30) ist.

8. Waage nach Anspruch 7, **dadurch gekennzeichnet, dass** das Hebeteil gegen Verdrehen gesichert ist.

9. Waage nach einem der vorhergehenden Ansprüche, **dadurch gekennzeichnet, dass** das Lastübertragungsteil eine Waagschale (34) ist.

10. Waage nach Anspruch 9, **dadurch gekennzeichnet, dass** die Waagschale (34) einen rückseitig abstehenden Zapfen (32) hat, der auf dem Wägesystem (14) in gekoppelter Position sitzt.

11. Waage nach einem der vorhergehenden Ansprüche, **dadurch gekennzeichnet, dass** das Lastübertragungsteil mit einem Aufnahmekonus (40) auf einem Stift (38) des Wägesystems (14) sitzt, von dem es abgehoben wird, um in die entkoppelte Stellung zu gelangen.

12. Waage nach einem der vorhergehenden Ansprüche, **dadurch gekennzeichnet, dass** eine nicht drehbare Schließplatte (46) für das Fenster (44) vorhanden ist, die in der geschlossenen Stellung gegen den Windschutz (18) bewegt ist, um ihn zu schließen.

13. Waage nach einem der vorhergehenden Ansprüche, **dadurch gekennzeichnet, dass** das Lastübertragungsteil um seine zentrale Achse (A) herum an mehreren Stellen beim Entkoppeln kontaktiert wird.

## Claims

1. Weighing machine with a weighing system (14), a weighing chamber (16), which is bounded by a draught shield (18) and into which a load transmission member receiving the weight of the load and introducing the loading into the weighing system (14) projects, and a drive (28) for opening and closing the draught shield (18), **characterised in that** a decoupling mechanism mechanically connected with the drive (28) is provided, which decoupling mechanism mechanically decouples the weighing system (14) in load direction from the load transmission member when the draught shield is open and couples the weighing system (14) in load direction with the load transmission member when the draught shield (18) is closed, and the draught shield (18) has a window (44) and is rotationally driven by the drive (28).

2. Weighing machine according to claim 1, **characterised in that** the decoupling mechanism is a lifting mechanism for raising and lowering the load transmission member.

3. Weighing machine according to claim 2, **characterised in that** the lifting mechanism mechanically converts a rotational movement of the draught shield (18) into a raising and lowering movement.

4. Weighing machine according to claim 2 or 3, **characterised in that** the lifting mechanism has a ramp surface (56) at one of two mutually opposite parts rotating relative top one another, preferably at a weighing chamber base (3), for generating the raising and lowering movement.

5. Weighing machine according to claim 4, **characterised in that** a roller element (58) running along the ramp surface (56) is provided, preferably wherein the roller element (58) is mounted on a coupling part (60) between a drive plate (50) and the draught shield (18).

6. Weighing machine according to claim 5, **characterised in that** the coupling part (60) is an annular discoid base which is mounted at the lower edge (20) of the draught shield (18) and extends radially inwardly from the edge (20) and which has at least one radially inwardly projecting mounting strap (62) for the roller element (58).

7. Weighing machine according to any one of the preceding claims 1, **characterised in that** the load transmission member is arranged concentrically with respect to a vertically movable lever part, which is arranged in a section thereunder and which is raised and comes into contact with the load transmission member, preferably wherein the lever part is a weighing chamber base (30).

8. Weighing machine according to claim 7, **characterised in that** the lever part is secured against twisting.

9. Weighing machine according to any one of the preceding claims 1, **characterised in that** the load transmission member is a weighing pan (34).

10. Weighing machine according to claim 9, **characterised in that** the weighing pan (34) has a spigot (32) which protrudes at the rear side and which is seated on the weighing system (14) in coupled position.

11. Weighing machine according to any one of the preceding claims 1, **characterised in that** the load transmission member is seated by a receiving cone (40) on a pin (38) of the weighing system (14), from which it is raised in order to transfer to the decoupled setting.

12. Weighing machine according to any one of the preceding claims 1, **characterised in that** a non-rotatable closure plate (46) for the window (44) is present, which plate in the closed setting is moved against the draught shield (18) in order to close it.

13. Weighing machine according to any one of the preceding claims 1, **characterised in that** the load transmission member is contacted around the central axis (A) thereof at several points when the decoupling takes place.

## Revendications

1. Balance comprenant un système de pesée (14), une chambre de pesée (16) délimitée par un paravent (18) et dans laquelle une partie de transfert de charge réceptionnant le poids de la charge et faisant passer la sollicitation dans le système de pesée (14) fait saillie, et un entraînement (28) pour l'ouverture et la fermeture du paravent (18), **caractérisée en ce qu'**un mécanisme de découplage relié mécaniquement à l'entraînement (28) est prévu, qui découple mécaniquement le système de pesée (14) de la partie de transfert de charge dans la direction de la charge lorsque le paravent (18) est ouvert, et qui couple le système de pesée (14) à la partie de transfert de charge dans la direction de la charge lorsque le paravent (18) est fermé et **en ce que** le paravent (18) présente une fenêtre (44) et est entraîné en rotation par l'entraînement (28).

2. Balance selon la revendication 1, **caractérisée en ce que** le mécanisme de découplage est un mécanisme de levage destiné à lever et à abaisser la partie de transfert de charge.

3. Balance selon la revendication 2, **caractérisée en ce que** le mécanisme de levage convertit mécaniquement un mouvement de rotation du paravent (18) en mouvement de levage et d'abaissement.

4. Balance selon la revendication 2 ou 3, **caractérisée en ce que** le mécanisme de levage présente une surface inclinée (56) sur une de deux parties opposées et tournant l'une par rapport à l'autre, de préférence sur un fond de chambre de pesée (30), pour générer le mouvement de levage et d'abaissement.

5. Balance selon la revendication 4, **caractérisée en ce qu'**un élément roulant (58) circulant le long de la surface inclinée (56) est prévu, dans lequel de préférence l'élément roulant (58) est monté sur une partie de couplage (60) entre un actionneur d'entraînement (50) et le paravent (18).

6. Balance selon la revendication 5, **caractérisée en ce que** la partie de couplage (60) est un fond du type disque annulaire, monté sur le bord inférieur (20) du paravent (18), s'étendant radialement vers l'intérieur à partir du bord (20), qui présente au moins une patte de support (62) faisant saillie radialement vers l'intérieur pour l'élément roulant (58).

7. Balance selon l'une quelconque des revendications précédentes, **caractérisée en ce que** la partie de transfert de charge est agencée de manière concentrique par rapport à une partie à lever mobile verticalement et agencée sous celle-ci sur certaines parties, laquelle est soulevée et vient en contact avec la partie de transfert de charge, dans lequel de préférence la partie à lever est un fond de chambre de pesée (30).

8. Balance selon la revendication 7, **caractérisée en ce que** la partie à lever est bloquée en rotation.

9. Balance selon l'une quelconque des revendications précédentes, **caractérisée en ce que** la partie de transfert de charge est une coque de pesée (34).

10. Balance selon la revendication 9, **caractérisée en ce que** la coque de pesée (34) présente un tourillon (32) faisant saillie vers l'arrière, qui repose sur le système de pesée (14) dans la position couplée.

11. Balance selon l'une quelconque des revendications précédentes, **caractérisée en ce que** la partie de transfert de charge repose au moyen d'un cône de logement (40) sur une tige (38) du système de pesée (14), dont elle est soulevée afin de parvenir dans la position découplée.

12. Balance selon l'une quelconque des revendications précédentes, **caractérisée en ce qu'**une plaque de fermeture (46) non rotative pour la fenêtre (44) est présente, qui est déplacée dans la position fermée contre le paravent (18) afin de le fermer.

13. Balance selon l'une quelconque des revendications précédentes, **caractérisée en ce que** la partie de transfert de charge est amenée en contact autour de son axe central (A) avec plusieurs emplacements aux fins de découplage.
